# EUROPEAN PATENT APPLICATION

(11) **EP 4 484 270 A1**
(43) Date of publication of application: **01.01.2025**
(21) Application number: 23182424.4
(22) Date of filing: 29.06.2023
(51) Int. Cl.: B63B 35/44, F03D 13/00, F03D 9/00, F03D 1/00

(54) **FLOATING WIND ENERGY INSTALLATION**

(71) Applicant: Siemens Gamesa Renewable Energy A/S, 7330 Brande (DK)
(72) Inventor: Hoegh, Gustav, 7100 Vejle (DK); Laugesen, Kasper, 6700 Esbjerg (DK)
(74) Representative: SGRE-Association

(57) **Abstract**

The invention describes a floating wind energy installation (1H) comprising a wind turbine (1) having a tower (10) supported by an offshore buoyant structure (17); a platform (2) arranged about the tower (10); and a load (20) arranged on the platform (2); characterized in that the orientation (Oₒₚₜ) of the platform (2) is determined on the basis of the prevailing wind direction (D). The invention further describes a method of assembling such a floating wind energy installation (1H).

## Description

### Background

In offshore wind energy installations, a floating-foundation wind turbine (FWT) can be deployed in deep sea locations in which it would be difficult or impossible to install a "fixed" foundation such as a monopile.

At the same time, development of wind-powered water electrolysis leads to the need for more offshore wind farm sites. In a known type of offshore wind-powered electrolysis installation, the AC output power of the wind turbine generator is rectified, and the DC voltage is used to drive one or more water electrolysis modules installed on a platform at the base of the tower. A resulting gaseous product - hydrogen (H₂) or oxygen (O₂) - can be compressed and stored locally or exported by pipeline to a remote facility.

However, the known offshore wind-powered electrolysis solutions are based on fixed-foundation designs, and the platforms used to support the electrolysis modules have been designed for convenience of transport and installation. For example, each electrolysis module can comprise multiple electrolytic cells arranged in the interior of a standard shipping container, and the necessary connections - for water intake, gas output, electrical interface etc. - are already in place when the container is transported to the offshore installation site. It is particularly convenient to arrange several such electrolysis modules side-by-side on the platform, so that an entire group (e.g. three or four electrolysis modules) can be connected at the manufacturing facility prior to transport, and then hoisted as one entity onto the platform. The platform used in such an offshore wind-powered electrolysis solution therefore has an asymmetric shape, owing to the uneven distribution of the electrolysis modules about the wind turbine tower.

This asymmetry can lead to problems with floating-foundation configurations. It is known that a floating-foundation wind turbine will be made to tilt "backwards" as a result of wind thrust against the rotor plane. A backward tilted rotor plane presents a smaller effective area to the wind, thereby reducing the efficiency of the wind turbine. At wind speeds above its rated wind speed, the power production of such a wind turbine is nominal, i.e. the wind turbine is outputting its maximum power, so that an effectively smaller rotor area (due to tilting of the wind turbine) is not of any consequence above the rated wind speed.

However, if such a floating-foundation wind turbine is equipped with an asymmetrically loaded electrolyzer platform as described above, the backward tilt can be further exacerbated. If the centre of mass of the system is downwind of the tower, the more pronounced backward tilt of the wind turbine results in a greater reduction in power output compared to an equivalent system without an electrolyzer platform. Therefore, the power output of a prior art floating-foundation wind-powered electrolysis installation can be significantly reduced.

It is therefore an object of the invention to provide an improved floating-foundation wind-powered electrolysis installation.

This object is achieved by the claimed floating wind energy installation and by the claimed method of assembling a floating wind energy installation.

### Description

In the following, the claimed floating wind energy installation shall be understood to comprise a wind turbine supported by a floating foundation or buoyant structure that is moored to the seabed using a suitable mooring arrangement, for example a set of catenary mooring lines, a set of taut mooring lines, or a set of tendons.

According to the invention, the floating wind energy installation further comprises a platform arranged about the tower and a load arranged on the platform. Unlike any prior art floating wind turbine, the orientation of the platform of the inventive installation is determined on the basis of the prevailing wind direction. For most of a wind turbine's operating life, its rotor plane is perpendicular to the wind and faces into the wind, so that any optimization will have a significant accumulated benefit over the wind turbine's service life.

As explained in the introduction, the platform is generally arranged at the base of the tower and loaded various components, including a number of electrolyser modules. For example, an electrolyser arrangement might include several container-sized electrolyser modules as well as various other units with a large total mass, such as power electronics, large transformers, batteries, water processing modules, cooling arrangements, hydrogen cleaning/drying equipment, oxygen and hydrogen vents, and permanently installed service equipment such as cranes, rails, etc. The invention is based on the insight that the loaded platform makes the overall structure markedly asymmetrical, and displaces the installation's centre of gravity (compared to an equivalent installation without the loaded platform). The unevenly distributed mass of the loaded platform results in a "default" tilting moment, i.e. the wind turbine is tilted to one side even in no-wind conditions. Regardless of how the electrolyser modules are arranged on the platform, any asymmetrical arrangement is associated with a major axis passing through the centre of mass of the loaded platform. Instead of attempting to redesign the platform to distribute the electrolyser modules symmetrically about the tower, or to redesign the mooring system to counteract the asymmetry, the inventors have realised that this tilting moment can be advantageously exploited to act as an "uprighting moment". This is done by designing the system so that the centre of mass of the system is offset in the upwind direction (relative to the centre of mass of the equivalent system) for most of the wind turbine's operation life. This is achieved by determining the direction of prevailing wind, i.e. the "dominant wind direction" at the installation site, and planning the installation so that the collective mass of the platform and load (the electrolyser modules) is shifted "into the wind", i.e. against the dominant wind direction.

According to the invention, a wind farm comprises a plurality of such floating wind energy installations, set up so that the platforms are all aligned essentially in the same direction.

According to the invention, the method of assembling such a floating wind energy installation comprises the steps of determining the prevailing wind direction at the installation site of the floating wind energy installation; determining, on the basis of the prevailing wind direction, a desired platform orientation; and mounting the platform and the wind turbine on the floating foundation according to the determined orientation.

Particularly advantageous embodiments and features of the invention are given by the dependent claims, as revealed in the following description. Features of different claim categories may be combined as appropriate to give further embodiments not described herein.

The terms "floating-foundation wind turbine" and "floating wind turbine" are regarded as synonyms and are abbreviated to "FWT" herein. The term "electrolyzer-FWT" is used to refer to an FWT equipped with a platform loaded with an arrangement of electrolyser modules. Since offshore water electrolysis generally focusses on the production of hydrogen gas, the loaded platform may be referred to as a "hydrogen platform" herein, and a FWT equipped with such a platform is referred to as a "hydrogen-FWT". As explained above, each electrolyser module can have the dimensions of a standard intermodal container or "ISO container", and can have a mass in the order of 300 tonnes. The modules can be secured to the platform using a twistlock system or other a suitable fastening arrangement.

In any offshore floating-foundation wind farm, there may be one or more hydrogen-FWTs with specific design constraints. For example, it may be desirable to relax the structural requirements of the mooring system of a hydrogen-FWT. This can be done by placing its platform so that the long axis of the platform is perpendicular to the dominant wind direction. In such an embodiment, the structural loading of the platform is improved, while the AEP of the wind turbine is essentially unchanged vis-à-vis an equivalent FWT.

However, maximising the AEP of the wind farm is generally the primary objective. Therefore, in a particularly preferred embodiment of the invention, a hydrogen-FWT is installed so that the long axis of the hydrogen platform is parallel to the dominant wind direction, and the centre of mass of the hydrogen platform is upwind of the tower axis. As explained above, for most of a wind turbine's operating life, its rotor plane is perpendicular to the wind and faces into the wind. Therefore, with the inventive approach, the electrolyzer modules will be upwind of the tower for most of the wind turbine's operating life, and the asymmetric loaded platform will exert an "uprighting moment" on the system, ensuring that the backward tilt of the rotor plane is minimized.

The hydrogen platform can be incorporated into the overall wind turbine design in any suitable manner. In a preferred embodiment of the invention, a transition piece is installed on the floating foundation or buoyant structure, and the transition piece comprises supporting structures to engage with the underside of the platform. The platform, with a central opening to fit about a cylindrical portion of the transition piece, is then lowered into place onto the supporting structures. After placing the platform, the wind turbine tower is then mounted on the transition piece.

The platform orientation can be determined according to one or more constraints or factors. For example, if optimization of AEP is of primary importance (to maximise the output of the electrolyser modules), the platform orientation will be chosen to minimize the largest tilt angle of the system.

The configuration of mooring lines of a floating foundation may be subject to significant loading when the wind turbine is tilted over a relatively long duration. Therefore, in a further preferred embodiment of the invention, a step of mooring the buoyant structure to the seabed is performed according to the determined platform orientation. For example, an established type of floating foundation deploys a vertical buoyancy column at each of three corners of a triangular framework, and a mooring line extending from each buoyancy column to the seabed. With the inventive approach, mooring lines are secured to the seabed so that, when the wind direction is the dominant wind direction, a "downwind" vertex of the tilted floating foundation is forced downwards (relaxing tension in the corresponding mooring line), and the remaining two "upwind" vertices are raised, thereby increasing the tension in the corresponding mooring lines, while ensuring that the load is shared by the two mooring lines.

Such a favourable configuration of mooring lines and floating foundation is preferably identified and prepared prior to installation of the wind turbine. However, an already operational system could be modified to benefit from the inventive approach. For example, more suitable anchor points may be identified for the floating foundation of a previously installed hydrogen-FWT. These new anchor points would effectively align the platform with the dominant wind direction as described above. In an upgrade manoeuvre, two or more mooring lines are detached from the seabed and reattached at the more advantageous anchor points. The expense of this manoeuvre may be outweighed by the benefits of increased AEP, for example.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows mooring solutions for a FWT;
Figure 2 shows such a prior art FWT during operation;
Figure 3 illustrates the relationship between inclination angle and wind speed for such the FWT of Figure 2;
Figure 4 illustrates the difference in power output between a fixed-foundation wind turbine and an equivalent FWT;
Figure 5 shows an embodiment of the inventive hydrogen-FWT;
Figure 6 is a schematic plan view of the hydrogen-FWT of Figure 5;
Figures 7 and 8 are schematic side views of the hydrogen-FWT of Figure 5;
Figures 9 and Figure 10 illustrate benefits of the inventive hydrogen-FWT;
Figure 11 shows an embodiment of the inventive wind farm;
Figures 12 and 13 illustrate alternative mooring solutions of prior art FWTs.

In the diagrams, like numbers refer to like objects throughout. Objects in the diagrams are not necessarily drawn to scale.

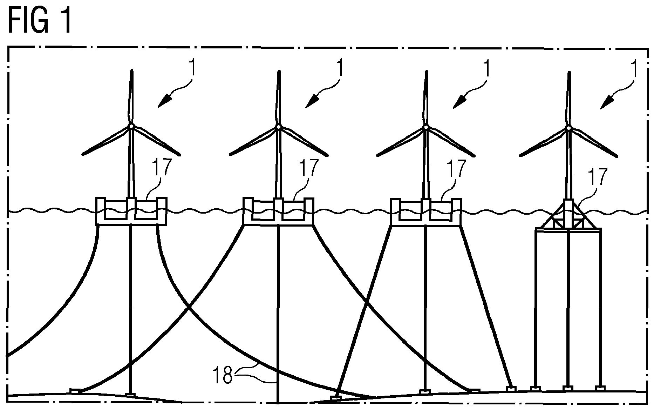

Figure 1 shows various mooring solutions for a FWT 1 with, from left to right, two catenary configurations, a taut mooring line configuration, and a tendon configuration. In each case, the wind turbine 1 is held afloat by a buoyant structure 17, and the mooring lines attach the buoyant structure 17 to the seabed.

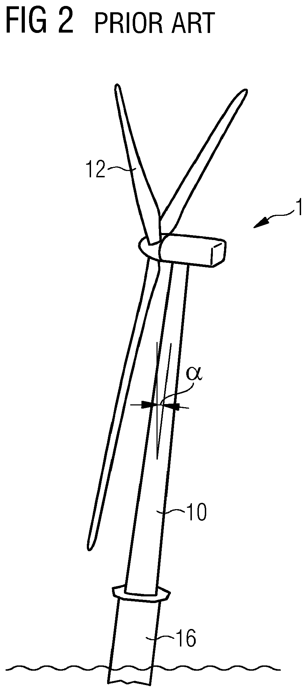

Figure 2 shows such a FWT 1 during operation. The force of the wind against the rotor blades is causing the entire FWT 1 - and therefore also the rotor plane - to tilt away from its "upright" position. As long as the rotor plane is tilted away from the incoming airflow, the power output of the wind turbine decreases accordingly. The angle of inclination α depends primarily on the thrust force on the rotor blades, which in turn depends primarily on the wind speed. The effective area of the rotor is essentially reduced by a factor of cos(α).

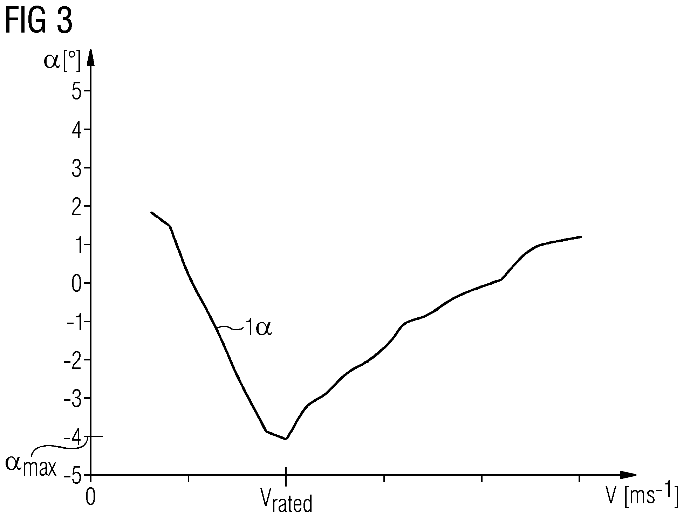

Figure 3 shows an exemplary curve 1α of inclination angle α vs. wind speed v for such a FWT, showing that the inclination angle α initially becomes negative (the FWT tilts backward) as wind speed v increases towards the wind turbine's rated wind speed ν_{rated}, with its largest tilt angle αₘₐₓ occurring at the rated wind speed ν_{rated}. At this point, the rotor blades are pitched to maintain power output, reducing the thrust on the aerodynamic rotor. As a result, the inclination angle α decreases, and the FWT 1 returns to a more upright inclination.

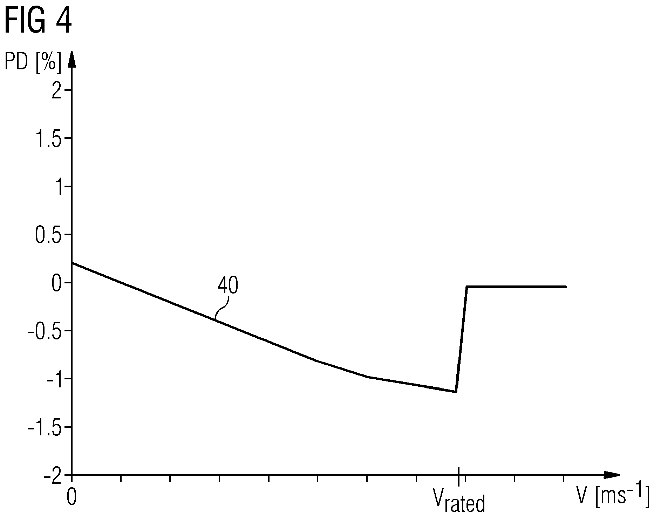

Figure 4 illustrates the difference PD (in percent) in power output between a fixed-foundation wind turbine and an equivalent FWT of the type described above. The diagram shows that, below the rated wind speed ν_{rated}, the power output difference P1 of the FWT 1 is lower, due to the reduced effective rotor plane area of the tilted FWT. At the rated wind speed ν_{rated} and above, the power difference between the fixed-foundation wind turbine and the equivalent FWT is zero, since both operate at nominal power.

However, the behaviour of a FWT equipped with a hydrogen platform can be significantly different, since the altered mass distribution will affect the amount by which the system will tilt under various conditions. As explained above, the inventors have realised that the increased tilting moment of such a FWT configuration can be advantageously exploited to act as an "uprighting moment".

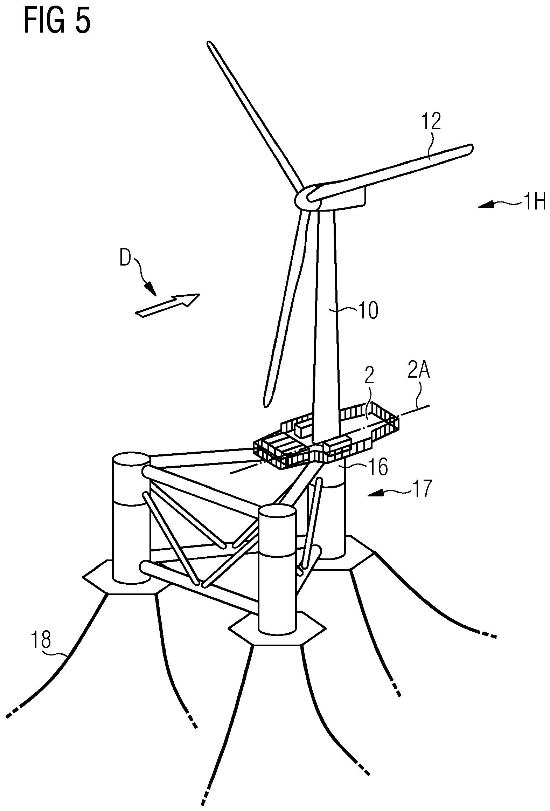

Figure 5 shows a floating wind turbine installation 1H similar to the installations of Figure 1, comprising a floating wind turbine augmented by a hydrogen platform 2. The platform 2 is mounted on a transition piece 16 between the buoyant structure 17 and the wind turbine tower 10. Several electrolyzer modules 20 are arranged on the platform 2, in a configuration known from fixed-foundation offshore installations. The assembly 1H is referred to herein as a "hydrogen FWT" or "H-FWT".

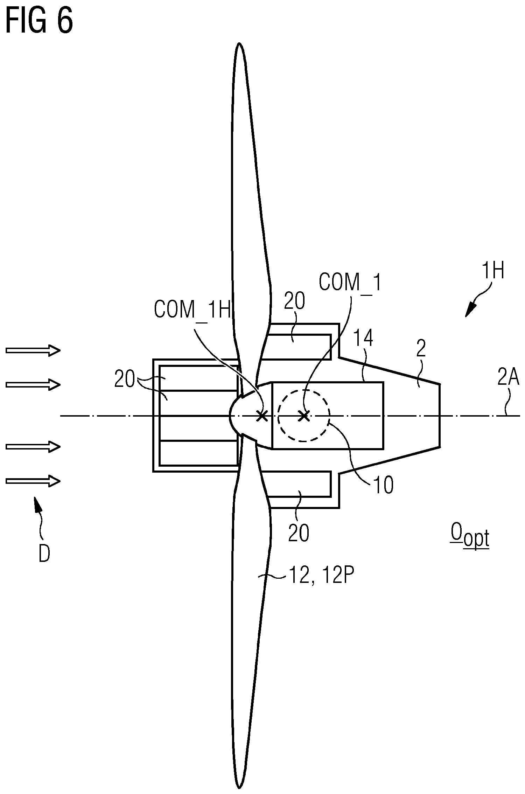

Since the electrolyzer modules 20 are arranged asymmetrically about the tower 10, the centre of mass of this configuration is offset from the centre of mass the equivalent FWT 1 (i.e. an equivalent wind turbine and mooring system, but without the hydrogen platform). To exploit the increased tilting moment of the hydrogen FWT 1H, the installation is assembled so that, once it is moored to the seabed, the longitudinal axis 2A of the platform 2 is aligned with the dominant wind direction D, and the centre of mass CoM_1H of the hydrogen FWT 1H is offset in the upwind direction. This is illustrated in Figure 6, which is a schematic showing the relevant elements from above, and illustrating the alignment of the platform 2 parallel to the dominant wind direction D. The diagram also shows the centre of mass CoM_1H of the system, offset (relative to the centre of mass CoM_1 of an equivalent FWT 1) in the upwind direction. The outline of the nacelle 14 is also shown, yawed so that the aerodynamic rotor 12 (represented by its rotor plane 12P) faces into the wind.

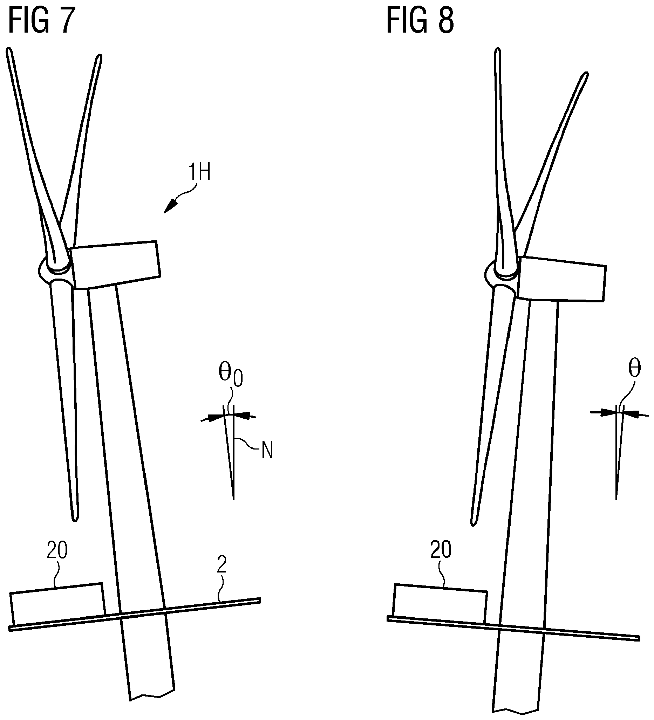

In low wind conditions (the wind turbine is idle or turning only slowly), this installation 1H is tilted by an inherent tilt angle θ₀ (relative to the normal N) owing to the uneven distribution of mass in the asymmetrical structure as shown in the schematic side view of Figure 7. In keeping with the convention used in Figure 3, this inherent tilt angle may be regarded as "positive". In Figure 8, thrust on the rotor blades causes the installation 1H to tilt away from the inherent tilt angle θ₀, passing through a zero tilt angle before becoming negative.

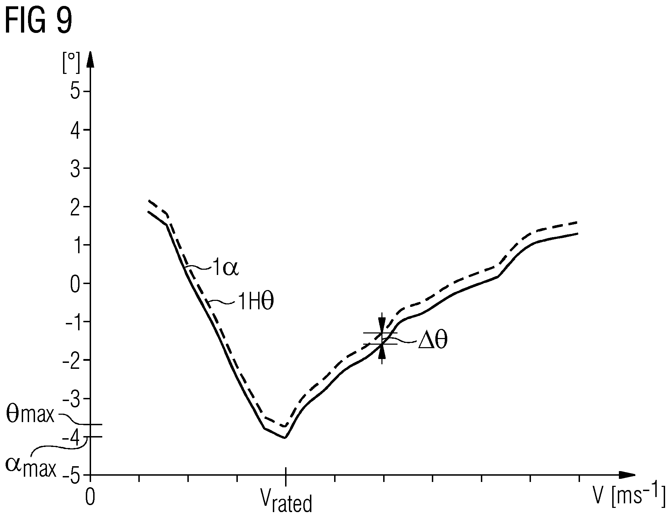

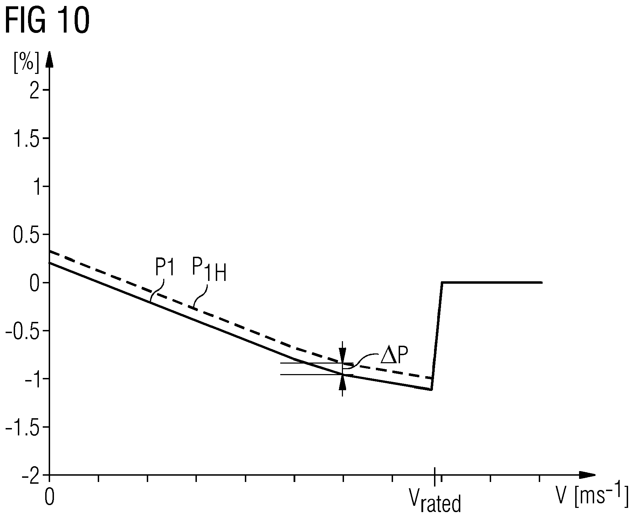

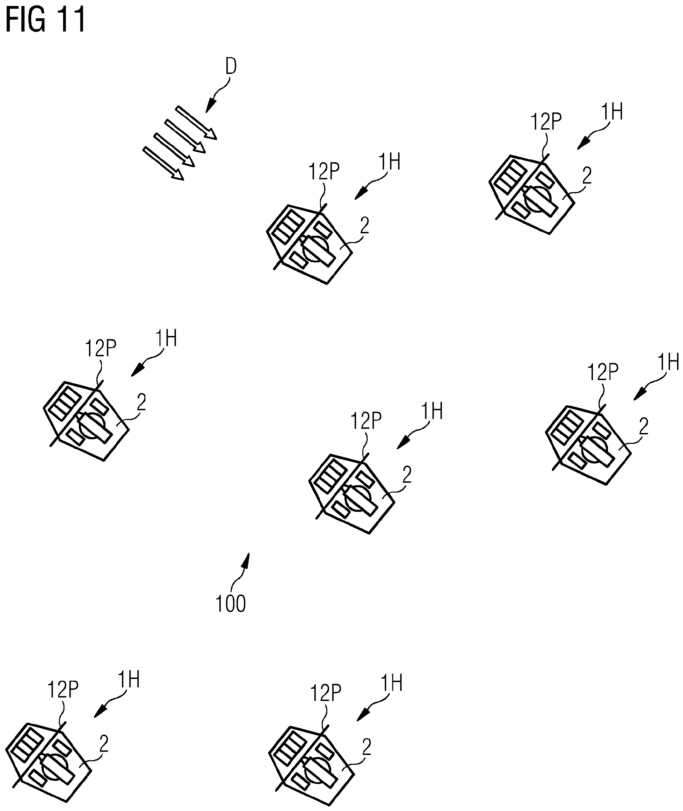

The beneficial effect of arranging the platform 2 in consideration of the dominant wind direction D is illustrated in Figure 9 and Figure 10. Figure 9 compares a tilting angle curve 1H_{θ} of such a hydrogen FWT 1H to the tilting angle curve 1_{α} of its equivalent FWT 1 (as explained in Figure 3) and shows that, for operation in prevailing wind conditions, the average tilting angle θ of the hydrogen FWT 1H is lower, due to the uprighting moment of the hydrogen platform 2. This small improvement Δθ in tilting angle (i.e. the hydrogen FWT is not tilted as much in the downwind direction as an equivalent FWT) results in an increase in output power, since the rotor 12 can extract more energy from the wind. Figure 10 shows a power output curve P1H of such a hydrogen FWT 1H and a power output curve P1 of its equivalent FWT 1 and shows that, for wind speeds approaching the rated wind speed, the power output of the inventive hydrogen FWT 1H is somewhat greater than the power output of its equivalent FWT 1 as indicated by the difference ΔP. Surprisingly, simply by arranging a hydrogen platform 2 in consideration of the dominant wind direction D, the annual energy output (AEP) of a hydrogen FWT 1H can exceed the AEP of its equivalent FWT 1. Figure 11 is a schematic representation of a wind farm 100 with a plurality of instances of the inventive hydrogen FWT 1H (seven are shown, but of course there may be many more). In this exemplary embodiment, the platforms of all hydrogen FWTs 1H are aligned in the established optimal orientation, namely parallel to the prevailing wind direction, and with the centre of mass in each case "upwind" of the tower. Here, the actual wind direction is shown to be the same as the prevailing wind direction D, so that the rotor plane of each hydrogen FWT 1H is also at right angles to the platform long axis 2A.

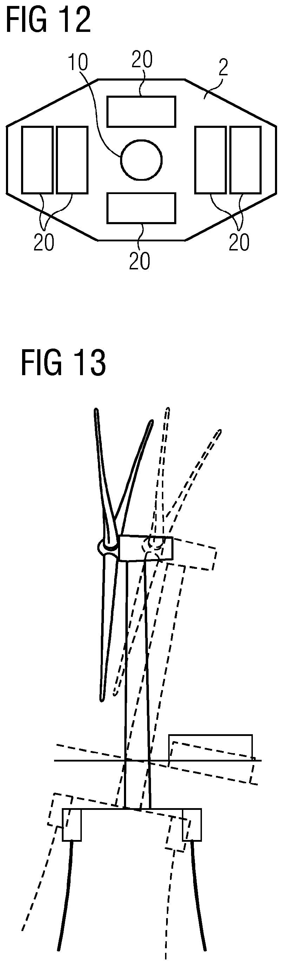

Figure 12 shows an alternative way of avoiding excessive tilt for a FWT 1 equipped with a hydrogen platform 2. Here, after a redesign of the hydrogen platform 2, the electrolyser modules 20 are arranged symmetrically about the tower 10. However, such redesign measures add significantly the overall costs, and - as regards AEP - the alternative design would have no added benefit compared to a fixed-foundation hydrogen wind turbine installation.

Figure 13 shows a further alternative way of avoiding excessive tilt for a FWT 1 equipped with a hydrogen platform 2. In this case, the mooring system 17, 18 has been redesigned to counteract the asymmetry of the floating installation. In low wind conditions, this configuration floats in an essentially "upright" state as shown. However, since no consideration is made regarding the alignment of the hydrogen platform, its presence can lead to unfavourable tilting of the floating assembly 1,2 during most of its operating life, as illustrated by the ghost lines. For example, if the centre of mass of the platform 2 is behind the rotor plane during dominant or near-dominant wind conditions, the tilt angle can greatly exceed the tilt angle α of an equivalent FWT 1, with correspondingly poor AEP.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A floating wind energy installation (1H) comprising
- a wind turbine (1) having a tower (10) supported by an offshore buoyant structure (17);
- a platform (2) arranged about the tower (10); and
- a load (20) arranged on the platform (2);
**characterized in that**
- the orientation (Oₒₚₜ) of the platform (2) is determined on the basis of the prevailing wind direction (D).

2. A floating wind energy installation according to the preceding claim, wherein the main axis (2A) of the loaded platform (2) is essentially parallel to the dominant wind direction (D).

3. A floating wind energy installation according to any of the preceding claims, wherein the centre of mass (COM_1H) of the floating wind energy installation (1H) is offset from the tower axis in a direction opposite to the dominant wind direction (D).

4. A floating wind energy installation according to any of the preceding claims, wherein the platform load comprises components of an electrolyser arrangement.

5. A floating wind energy installation according to any of the preceding claims, comprising a transition piece (16) between the buoyant structure (17) and the wind turbine tower (10), and wherein the platform (2) is mounted on the transition piece (16).

6. A floating wind energy installation according to the preceding claim, wherein a plurality of electrolyser modules (20) is arranged in an asymmetrical configuration about the wind turbine tower (10).

7. A floating wind energy installation according to any of the preceding claims, wherein the buoyant structure (17) comprises a triangular configuration of buoyancy chambers.

8. A floating wind energy installation according to any of the preceding claims, comprising a mooring arrangement (18) between the buoyant structure (17) and the seabed.

9. A plurality of floating wind energy installations (1H) according to any of claims 1 to 8, and wherein the platforms (2) of the floating wind energy installations (1H) have the same orientation (Oₒₚₜ).

10. A method of assembling a floating wind energy installation (1H) according to any of claims 1 to 8, which method comprises the steps of
- determining the prevailing wind direction (D) at the installation site of the floating wind energy installation (1H);
- determining, on the basis of the prevailing wind direction (D), a desired orientation (Oₒₚₜ) of the loaded platform (2, 20);
- mounting the platform (2) and the wind turbine (1H) on the buoyant structure (17) according to the determined platform orientation (Oₒₚₜ).

11. A method according to the preceding claim, wherein the platform orientation (Oₒₚₜ) is determined on the basis of a desired tilt behaviour.

12. A method according to any of the preceding method claims, wherein a step of mooring the buoyant structure (17) to the seabed is performed according to the determined platform orientation (Oₒₚₜ).

13. A method according to any of the preceding method claims, comprising a step of loading the platform (2) with an asymmetrical configuration of electrolyser modules (20).
